# EUROPÄISCHE PATENTSCHRIFT

(11) **EP 1 382 630 B1**
(45) Veröffentlichungstag und Bekanntmachung des Hinweises auf die Patenterteilung: **22.02.2006**
(21) Anmeldenummer: 03015132.8
(22) Anmeldetag: 04.07.2003
(51) Int. Cl.: C08G 77/08

(54) **Verfahren zur Herstellung von organomodifizierten Polysiloxanen unter Verwendung ionischer Flüssigkeiten**
Process for the production of organically modified Polysiloxanes by using ionic liquids
Procédé de préparation de polysiloxanes modifiées organiquement en utilisant des liquides ioniques

(30) Priorität: 17.07.2002 DE 10232305
(43) Veröffentlichungstag der Anmeldung: 21.01.2004
(73) Patentinhaber: Goldschmidt GmbH, 45127 Essen (DE)
(72) Erfinder: Hell, Kerstin, 45326 Essen (DE); Hesse, Ute, 45143 Essen (DE); Weyershausen, Bernd, Dr., 45127 Essen (DE)

(56) Entgegenhaltungen:
- EP-A- 0 479 463

## Beschreibung

Gegenstand der Erfindung ist ein Verfahren zur Herstellung von organomodifizierten Polysiloxanen durch übergangsmetallkatalysierte Addition von SiH-Gruppen enthaltenden Polysiloxanen an CC-Mehrfachbindungen enthaltende Substanzen unter Verwendung von ionischen Flüssigkeiten und der damit verbundenen unmittelbaren Wiederverwendbarkeit der Übergangsmetallkatalysatoren für nachfolgende Katalysezyklen.

Unter den Verfahren zum Aufbau und zur Modifizierung von Organopolysiloxanen kommt der übergangsmetallkatalysierten Hydrosilylierung eine besondere Bedeutung zu, da sie in vielfältiger Weise SiC-Verknüpfungen ermöglicht. Ungeachtet der Anwendungsbreite dieser Reaktion ist deren technische Umsetzung jedoch oft von erheblichen Schwierigkeiten begleitet.

Ein Problem stellt die zeitlich veränderliche und vielen Störeinflüssen ausgesetzte Katalysatoraktivität dar.

Nachteilig bei der übergangsmetallkatalysierten Hydrosilylierung nach dem Stand der Technik (siehe Bogdan Marcniec in "Applied Homogeneous Catalysis with Organometallic Compounds", Volume 1, Eds: Boy Cornils, Wolfgang A. Herrmann, VCH, Weinheim, 1996, S. 487-494) ist ferner, dass der Katalysator in der Regel im Produkt verbleibt beziehungsweise nur mit erheblichem Aufwand aus den Produkten entfernt werden kann (Kosten für die Extraktion des Katalysators).

In der homogenen Katalyse stellt die Abtrennung bzw. Immobilisierung sowie insbesondere die unmittelbare Wiederverwendung des Katalysators sowohl aus ökonomischen als auch ökologischen Gesichtspunkten heraus generell ein großes Problem dar. Dies führt wiederum zu Bemühungen, die Menge an eingesetztem Katalysator möglichst gering zu halten, was aber andererseits relativ lange Reaktionszeiten bedingt.

Eine technische Anwendung ist vor diesem Hintergrund nur dann wirtschaftlich sinnvoll, wenn die Katalysatorverluste, in Kombination mit akzeptablen Reaktionszeiten, sehr gering gehalten werden können.

Es besteht daher Bedarf an Verfahren, die es ermöglichen, den Katalysator a) möglichst ohne Verluste und b) mit der geringstmöglichen Belastung für die Produkte zu rezyklieren.

In der Vergangenheit wurde deshalb intensiv an "Heterogenisierung", "Immobilisierung" und "Verankerung" homogener Katalysatoren zur vereinfachten Katalysatorabtrennung von den Produkten sowie Katalysatorrückgewinnung gearbeitet (allgemein siehe "Applied Homogeneous Catalysis with Organometallic Compounds", volume 2, Eds: Boy Cornils, Wolfgang A. Herrmann, VCH, Weinheim, 1996, S. 573-623). Zu Arbeiten zur Immobilisierung von Übergangsmetallkomplexen für den Einsatz in der Hydrosilylierungsreaktion siehe: Bogdan Marcniec in "Applied Homogeneous Catalysis with Organometallic Compounds", Volume 1, Eds: Boy Cornils, Wolfgang A. Herrmann, VCH, Weinheim, 1996, S. 494-496 und hierin zitierte Literatur.

Neben beispielsweise der Extraktion der Katalysatoren oder deren Adsorption an Ionenaustauschern ist eine mehrphasige Reaktionsführung eine weitere Möglichkeit zur Trennung von Produkt- und Katalysatorphase. Hierbei wird die begrenzte Mischbarkeit der Produktphase mit der Katalysatorphase zur Abtrennung ausgenutzt.

In den letzten Jahren hat die Zweiphasenreaktion mit ionischer Flüssigkeit stetig an Bedeutung gewonnen. In allen bekannten Beispielen bildet die ionische Flüssigkeit die Phase, in der der Katalysator gelöst vorliegt.

Als ionische Flüssigkeit ("ionic liquids") bezeichnet man bei niedrigen Temperaturen (< 100 °C) schmelzende Salze, die eine neuartige Klasse von Lösungsmitteln mit nichtmolekularem, ionischem Charakter darstellen. Im Gegensatz zu klassischen Salzschmelzen, die hochschmelzende, hochviskose und sehr korrosive Medien darstellen, sind ionische Flüssigkeiten bereits bei niedrigen Temperaturen flüssig und relativ niedrig viskos (K.R. Seddon J. Chem. Technol. Biotechnol. 1997, 68, 351-356).

Ionische Flüssigkeiten bestehen in den meisten Fällen aus Anionen wie Halogeniden, Carboxylaten, Phosphaten, Sulfaten, Sulfonaten, Tetrafluoroboraten oder Hexafluorophosphaten kombiniert mit substituierten Ammonium-, Phosphonium-, Pyridinium- oder Imidazolium-Kationen.

Mit vielen organischen Produktgemischen bilden ionische Flüssigkeiten zwei Phasen, woraus sich die Möglichkeit einer mehrphasigen Reaktionsführung zur Abtrennung homogener Katalysatoren ergibt. Einen allgemeinen Überblick zu diesem Thema findet man z. B. bei T. Welton Chem. Rev. 1999, 99, 2071-2083; J. D. Holbrey, K. R. Seddon Clean Products and Processes 1999, 1, 223-236; P. Wasserscheid, W. Keim Angew. Chem. 2000, 112, 3926-3945 und R. Sheldon Chem. Commun. 2001, 2399-2407.

In einigen Veröffentlichungen wird die mehrphasige Reaktionsführung zur leichteren Separation homogener Katalysatoren beschrieben: zum Beispiel die Hydrierung von Olefinen mit Rhodium(I) (R. F. de Souza et al. Polyhedron 1996, 15, 1217-1219) oder Hydroformylierungsreaktionen (Y. Chauvin et al. Angew. Chem. 1995, 107, 2941-2943. N. Karodia et al. Chem. Commun. 1998, 2341-2342). In allen diesen Beispielen wird die Produktseparation durch Phasentrennung erreicht.

Dieses Verfahren hat teilweise den Nachteil, dass die eingesetzten Standardkatalysatoren wie beispielsweise der von Chauvin eingesetzte Wilkinson-Katalysator [(Ph₃P)₃Rh(I)Cl] (Angew. Chem. 1995, 107, 2941-2943) nicht vollständig in der polaren ionischen Flüssigkeit (Organohexafluorophosphat, -tetrafluoroborat) zurückbleibt, sondern auch in die Produktphase diffundiert ("Katalysator-leaching"). Abhilfe schafft hier eine Modifizierung des Katalysators, so dass dieser vollständig in der ionischen Flüssigkeit verbleibt. Dies kann zum Beispiel durch den Ersatz des Triphenylphosphanliganden durch die Natriumsalze des mono- und trisulfonierten Triphenylphosphans erreicht werden, jedoch nimmt in diesem Fall die katalytische Aktivität dramatisch ab.

Aufgabe der vorliegenden Erfindung war daher, ein Verfahren bereitzustellen, welches die einfache Rezyklierung des Hydrosilylierungskatalysators bei der Herstellung von organomodifizierten Polysiloxanen ermöglicht.

Es wurde nun überraschend gefunden, dass unter Verwendung einer Katalysatorphase, bestehend aus einer geeigneten Kombination eines Standardhydrosilylierungskatalysators mit einer ionischen Flüssigkeit, CC-Mehrfachbindungen enthaltende Substanzen mit (Si-H)-funktionellen Polysiloxanen hydrosilyliert werden können. Nach Ablauf der Reaktion kann die Katalysatorphase durch simple Phasenseparation (Abdekantieren der Produktphase oder Filtration) von der Produktphase getrennt und ohne Aktivitätsverlust direkt wieder eingesetzt werden.

Überraschenderweise tritt hierbei selbst bei Verwendung der Standardkatalysatoren kein "Katalysator-leaching" auf, so dass das Produkt metallfrei erhalten wird. Dadurch entfällt im Gegensatz zu den von Chauvin (Angew. Chem. 1995, 107, 2941-2943) beschrieben Hydrierungsreaktionen die Modifizierung der Liganden, um ein "leaching" zu verhindern. Des Weiteren wurde überraschenderweise gefunden, dass die ionische Flüssigkeit einen stabilisierenden Einfluss auf die Aktivität des Übergangsmetallkatalysators besitzt, da diese auch bei mehrfacher Wiederverwendung des eingestzten Katalysators nicht negativ beinflusst wird, sondern gleich bleibt.

Ein Gegenstand der Erfindung ist daher ein Verfahren zur Herstellung von organomodifizierten Polysiloxanen durch übergangsmetallkatalysierte Addition von SiH-Gruppen enthaltenden Polysiloxanen an CC-Mehrfachbindungen enthaltende Substanzen, welches dadurch gekennzeichnet ist, dass
a) die Reaktion in Gegenwart ionischer Flüssigkeiten durchgeführt und
b) nach Beendigung der Reaktion diese wieder zusammen mit dem gelösten Katalysator von der Reaktionsmischung separiert wird.

Ferner ist es möglich eine ionische Flüssigkeit auch nach einer Standardhydrosilylierungsreaktion, die gemäß dem Stand der Technik durchgeführt wurde, zu der Reaktionsmischung zu geben. Im ersten Fall (Zugabe der ionische Flüssigkeit zur Reaktionsmischung vor oder während der Hydrosilylierungsreaktion) wird die erfindungsgemäße Katalysatorphase *in situ* gebildet, während die Zugabe einer ionischen Flüssigkeit zur Reaktionsmischung einer Standardhydrosilylierungsreaktion, d.h. nach vollständig abgelaufener Reaktion (100 % SiH-Umsatz), der Extraktion des Katalysators aus der Reaktionsmischung beziehungsweise aus der Produktphase gleichkommt.

Ein weiterer Gegenstand der Erfindung ist daher ein Verfahren zur Extraktion der bei der Standardhydrosilylierungsreaktion verwendeten Katalysatoren, welches dadurch gekennzeichnet ist, dass als Extraktionsmittel der Reaktionsmischung nach beendeter Reaktion zugesetzte ionische Flüssigkeiten verwendet werden.

In allen Fällen wird durch die Zugabe der ionischen Flüssigkeit eine Katalysatorphase generiert, die den Hydrosilylierungskatalysator homogen gelöst enthält und die ohne Katalysatorverluste von der Produktphase durch einfaches Abdekantieren oder Filtrieren abgetrennt werden kann. Diese Katalysatorphase kann ohne weitere Nachbehandlung in weiteren Hydrosilylierungsreaktionen eingesetzt werden, wobei kein Aktivitätsverlust des Hydrosilylierungskatalysators auftritt. Das erfindungsgemäße Verfahren ermöglicht somit eine problemlose Rezyklierung des teuren Edelmetallkatalysators.

Ein weiterer Gegenstand der Erfindung ist daher ein Verfahren zur Durchführung von Standardhydrosilylierungsreaktionen, welches dadurch gekennzeichnet ist, dass der Reaktionsmischung rezyklierte Mischungen aus Katalysator und ionischer Flüssigkeit zugesetzt werden.

Das erfindungsgemäße Verfahren zur Herstellung von organomodifizierten Polysiloxanen durch übergangsmetallkatalysierte Addition von SiH-Gruppen enthaltenden Polysiloxanen an CC-Mehrfachbindungen enthaltende Substanzen und der damit verbundenen unmittelbaren Wiederverwendbarkeit der Übergangsmetallkatalysatoren für nachfolgende Katalysezyklen ist dadurch gekennzeichnet, dass dem Reaktionsgemisch eine ionische Flüssigkeit zugegeben wird, die sich aus mindestens einer quartären Stickstoff und/oder Phosphorverbindung und mindestens einem Anion zusammensetzt und deren Schmelzpunkt unterhalb ca. + 250 °C, vorzugsweise unterhalb ca. + 150 °C, insbesondere unterhalb ca. + 90 °C liegt.

Die in dem erfindungsgemäßen Verfahren bevorzugt eingesetzten ionischen Flüssigkeiten bestehen aus mindestens einem Kation der allgemeinen Formeln:

R¹R²R³R⁴N^{⊕} (1)

R¹R²N^{⊕}=CR³R⁴ (2)

R¹R²R³R⁴P^{⊕} (3)

R¹R²P^{⊕}=CR³R⁴ (4)

in denen
- R¹,R²,R³,R⁴: gleich oder unterschiedlich sind und Wasserstoff, einen linearen oder verzweigten aliphatischen Kohlenwasserstoffrest mit 1 bis 20 Kohlenstoffatomen, einen cycloaliphatischen Kohlenwasserstoffrest mit 5 bis 30 Kohlenstoffatomen, einen aromatischen Kohlenwasserstoffrest mit 6 bis 30 Kohlenstoffatomen, einen Alkylarylrest mit 7 bis 40 Kohlenstoffatomen, einen durch ein oder mehrere Heteroatome (Sauerstoff, NH, NR' mit R' C₁ bis C₅-Alkylrest, insbesondere -CH₃) unterbrochenen linearen oder verzweigten aliphatischen Kohlenwasserstoffrest mit 2 bis 20 Kohlenstoffatomen, einen durch ein oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)-, -N(CH₃)-S(O₂)-, unterbrochenen linearen oder verzweigten aliphatischen Kohlenwasserstoffrest mit 2 bis 20 Kohlenstoffatomen, einen endständig OH, NH₂, N(H)R' mit R' C₁- bis C₅-Alkylrest, funktionalisierten linearen oder verzweigten aliphatischen Kohlenwasserstoffrest mit 1 bis 20 Kohlenstoffatomen oder einen blockweise oder statistisch aufgebauten Polyether gemäß -(R⁵-O)ₙ-R⁶ bedeuten,
wobei
R⁵ ein 2 bis 4 Kohlenstoffatome enthaltender linearer oder verzweigter Kohlenwasserstoffrest,
n 1 bis 30, vorzugsweise 2 bis 15, ist und
R⁶ Wasserstoff, einen linearen oder verzweigten aliphatischen Kohlenwasserstoffrest mit 1 bis 20 Kohlenstoffatomen einen cycloaliphatischen Kohlenwasserstoffrest mit 5 bis 30 Kohlenstoffatomen, einen aromatischen Kohlenwasserstoffrest mit 6 bis 30 Kohlenstoffatomen, einen Alkylarylrest mit 7 bis 40 Kohlenstoffatomen bedeutet oder ein Rest -C(O)-R⁷ mit
R⁷ gleich einem linearen oder verzweigten aliphatischen Kohlenwasserstoffrest mit 1 bis 20 Kohlenstoffatomen, einem cycloaliphatischen Kohlenwasserstoffrest mit 5 bis 30 Kohlenstoffatomen, einem aromatischen Kohlenwasserstoffrest mit 6 bis 30 Kohlenstoffatomen, einem Alkylarylrest mit 7 bis 40 Kohlenstoffatomen ist.

Als Kationen kommen ferner Ionen in Betracht, die sich von gesättigten oder ungesättigten cyclischen Verbindungen sowie von aromatischen Verbindungen mit jeweils mindestens einem dreibindigen Stickstoffatom in einem 4- bis 10-, vorzugsweise 5- bis 6-gliedrigen heterocyclischen Ring ableiten, der gegebenenfalls substituiert sein kann. Solche Kationen lassen sich vereinfacht (d. h. ohne Angabe von genauer Lage und Zahl der Doppelbindungen im Molekül) durch die nachstehenden allgemeinen Formeln (5), (6) und (7) wiedergeben, wobei die heterocyclischen Ringe gegebenenfalls auch mehrere Hetereoatome enthalten können. 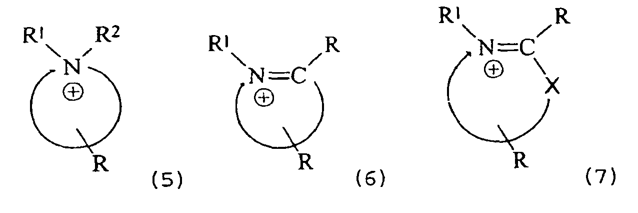
- R¹ und R²: besitzen dabei die vorgenannte Bedeutung,
- R: ist ein Wasserstoff, ein linearer oder verzweigter aliphatischer Kohlenwasserstoffrest mit 1 bis 20 Kohlenstoffatomen, ein cycloaliphatischer Kohlenwasserstoffrest mit 5 bis 30 Kohlenstoffatomen, ein aromatischer Kohlenwasserstoffrest mit 6 bis 30 Kohlenstoffatomen oder ein Alkylarylrest mit 7 bis 40 Kohlenstoffatomen. Beispiele für cyclische Stickstoffverbindungen der vorgenannten Art sind Pyrrolidin, Dihydropyrrol, Pyrrol, Oxazolin, Oxazol, Thiazolin, Thiazol, Isoxazol, Isothiazol, Indol, Carbazol, Piperidin, Pyridin, die isomeren Picoline und Lutidine, Chinolin und iso-Chinolin. Die cyclischen Stickstoffverbindungen der allgemeinen Formeln(5), (6) und (7) können unsubstituiert (R = H), einfach oder auch mehrfach durch den Rest R substituiert sein.
- X: ist ein Sauerstoffatom, ein Schwefelatom oder ein substituiertes Stickstoffatom (X = O, S, NR).

Als Kationen kommen weiterhin Ionen in Betracht, die sich von gesättigten acyclischen, gesättigten oder ungesättigten cyclischen Verbindungen sowie von aromatischen Verbindungen mit jeweils mehr als einem dreibindigen Stickstoffatom in einem 4- bis 10-, vorzugsweise 5- bis 6-gliedrigen heterocyclischen Ring ableiten. Diese Verbindungen können sowohl an den Kohlenstoffatomen als auch an den Stickstoffatomen substituiert sein, vorzugsweise durch Alkylreste mit 1 bis 10 Kohlenstoffatomen und durch Phenylreste. Sie können ferner durch, gegebenenfalls substituierte, Benzolringe und/oder Cyclohexanringe unter Ausbildung mehrkerniger Strukturen aneliert sein. Beispiele für solche Verbindungen sind Pyrazol, 3,5-Dimethylpyrazol, Imidazol, Benzimidazol, N-Methylimidazol, Dihydropyrazol, Pyrazolidin, Pyridazin, Pyrimidin, Pyrazin, Pyridazin, Pyrimidin, 2,3-, 2,5- und 2,6-Dimethylpyrazin, Cimolin, Phthalazin, Chinazolin, Phenazin und Piperazin. Insbesondere vom Imidazol und seinen Alkyl- und Phenylderivaten abgeleitete Kationen der allgemeinen Formel (8) haben sich als Bestandteil ionischer Flüssigkeit bewährt.

Als Kationen kommen ferner Ionen in Betracht, welche zwei Stickstoffatome enthalten und durch die allgemeine Formel (8) wiedergegeben sind 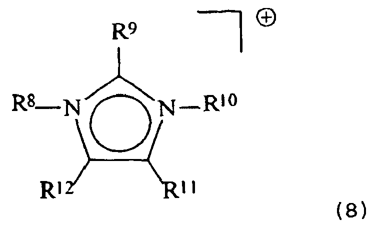
in denen
- R⁸,R⁹,R¹⁰,R¹¹,R¹²: gleich oder unterschiedlich sind und Wasserstoff, einen linearen oder verzweigten aliphatischen Kohlenwasserstoffrest mit 1 bis 30 Kohlenstoffatomen, einen cycloaliphatischen Kohlenwasserstoffrest mit 5 bis 30 Kohlenstoffatomen, einen aromatischen Kohlenwasserstoffrest mit 6 bis 30 Kohlenstoffatomen, einen Alkylarylrest mit 7 bis 40 Kohlenstoffatomen, einen durch ein oder mehrere Heteroatome (Sauerstoff, NH, NR' mit R' C₁ bis C₅-Alkylrest,) unterbrochenen linearen oder verzweigten aliphatischen Kohlenwasserstoffrest mit 1 bis 20 Kohlenstoffatomen, einen durch ein oder mehrere Funktionalitäten, ausgewählt aus der Gruppe -O-C (O)-, -(O)C-O-, -NH-C(O)-, -(O)C-NH, -(CH₃)N-C(O)-, -(O)C-N(CH₃)- , -S(O₂)-O- , -O-S(O₂)-,-S(O₂)-NH-, -NH-S(O₂)-, -S(O₂)-N(CH₃)-, -N(CH₃)-S(O₂)-, unterbrochenen linearen oder verzweigten aliphatischen Kohlenwasserstoffrest mit 1 bis 20 Kohlenstoffatomen, einen endständig OH, NH₂, N(H)R' mit R' C₁- bis C₅-Alkylrest, funktionalisierten linearen oder verzweigten aliphatischen Kohlenwasserstoffrest mit 1 bis 20 Kohlenstoffatomen oder einen blockweise oder statistisch aufgebauten Polyether aufgebaut aus -(R⁵-O)ₙ-R⁶ bedeuten,
wobei
R⁵ ein 2 bis 4 Kohlenstoffatome enthaltender Kohlenwasserstoffrest,
n 1 bis 30 ist und
R⁶ Wasserstoff, einen linearen oder verzweigten aliphatischen Kohlenwasserstoffrest mit 1 bis 20 Kohlenstoffatomen einen cycloaliphatischen Kohlenwasserstoffrest mit 5 bis 30 Kohlenstoffatomen, einen aromatischen Kohlenwasserstoffrest mit 6 bis 30 Kohlenstoffatomen, einen Alkylarylrest mit 7 bis 40 Kohlenstoffatomen bedeutet oder ein Rest -C(O)-R⁷ mit
R⁷ gleich einem linearen oder verzweigten aliphatischen Kohlenwasserstoffrest mit 1 bis 20 Kohlenstoffatomen, einem cycloaliphatischen Kohlenwasserstoffrest mit 5 bis 30 Kohlenstoffatomen, einem aromatischen Kohlenwasserstoffrest mit 6 bis 30 Kohlenstoffatomen, einem Alkylarylrest mit 7 bis 40 Kohlenstoffatomen ist.

Die in dem erfindungsgemäßen Verfahren bevorzugt eingesetzten ionischen Flüssigkeiten bestehen aus mindestens einem der vorgenannten Kationen kombiniert mit jeweils einem Anion. Bevorzugte Anionen werden ausgewählt aus der Gruppe - ohne Anspruch auf Vollständigkeit - der Halogenide, Bis(perfluoralkylsulfonyl)amide, Alkyl- und Aryltosylate, Perfluoralkyltosylate, Nitrate, Sulfate, Hydrogensulfate, Alkyl- und Arylsulfate, Perfluoralkylsulfate, Sulfonate, Alkyl- und Arylsulfonate, perfluorierte Alkyl- und Arylsulfonate, Alkyl- und Arylcarboxylate, Perfluoralkylcarboxylate, Perchlorate, Tetrarchloroaluminate, Saccharinate. Weiterhin sind Dicyanamid, Tetrafluoroborat, Hexafluorophosphat und Phosphat bevorzugte Anionen.

Die ionische Flüssigkeit wird durch Variation des Kations und des Anions so modifiziert, dass die ionische Flüssigkeit mit der Produktphase nicht mischbar ist, der Katalysator aber in der ionischen Flüssigkeit löslich und in der Produktphase nicht löslich ist.

Die Menge zugesetzter ionischer Flüssigkeit besitzt einen Massenanteil im Bereich von 0,1 bis 98 %, vorzugsweise 0,1 bis 20 %, besonders bevorzugt 0,5 bis 5 % an der heterogenen Reaktionsmischung.

Das erfindungsgemäße Verfahren zur Herstellung von organomodifizierten Polysiloxanen durch übergangsmetallkatalysierte Addition von SiH-Gruppen enthaltenden Polysiloxanen an CC-Mehrfachbindungen enthaltende Substanzen unter Verwendung von ionischen Flüssigkeiten und der damit verbundenen unmittelbaren Wiederverwendbarkeit der Übergangsmetallkatalysatoren für nachfolgende Katalysezyklen beruht darauf, dass ionische Flüssigkeiten, wie sie voranstehend beschrieben wurden, vor, während oder nach der Hydrosilylierung zur Reaktionsmischung gegeben werden.

Vorzugsweise wird der Katalysator vor der Reaktion in einer ionischen Flüssigkeit gelöst und dann zu den Reaktanden gegeben. Als Katalysator können alle literaturbekannten Hydrosilylierungskatalysatoren verwendet werden. Beispiele für solche Hydrosilylierungskatalysatoren sind Hexachloroplatinsäure(IV) (Speyer-Katalysator), *cis*-Diammindichloroplatin(II) (*cis*-Pt), Di-µ-chloro-dichloro-bis-(cyclohexen)diplatin(II) (Pt-92), Tris(triphenylphosphan)rhodium(I)chlorid (Rh-100). Diese Auswahl stellt jedoch keine Einschränkung bezüglich der in Frage kommenden Hydrosilylierungskatalysatoren dar.

Ionische Flüssigkeiten können prinzipiell in allen Hydrosilylierungsreaktionen, wie im Stand der Technik beispielsweise beschrieben in Walter Noll "Chemie und Technologie der Silicone", Verlag Chemie GmbH, Weinheim/Bergstr., 1968; Bogdan Marciniec, Comprehensive Handbook on Hydrosilylation, Oxford: Pergamon Press, 1992; DE-A-21 31 741; DE-A-198 59 759; DE-A-199 07 814 eingesetzt werden. Die vorgenannten Patenschriften werden als Referenz für die bevorzugten Edukte (sowohl hinsichtlich der (Si-H)-funktionellen Polydimethylsiloxane als auch der CC-Mehrfachbindungen enthaltenden Substanzen) sowie Reaktionsbedingungen aufgeführt.

### Beispiele für das erfindungsgemäße Verfahren:

### Allgemeine Versuchsdurchführung:

Ein (Si-H)-funktionelles Polydimethylsiloxan wird zusammen mit 1,3 Äquivalenten (CC-Mehrfachbindungen bezogen auf (Si-H)-Funktionen) einer CC-Mehrfachbindung enthaltende Verbindungen auf 50 bis 160 °C, vorzugsweise auf 80 bis 100 °C erhitzt. Zu dieser Mischung werden 20 ppm (Metallgehalt bezogen auf Gesamtansatzgröße) Hydrosilylierungskatalysator gelöst in einer ionischen Flüssigkeit (0,5 g pro 0,02 val (Si-H)-funktionelles Polydimethylsiloxan) gegeben und bei vorzugsweise 80 bis 100 °C gerührt. Der Reaktionsfortschritt wird mittels Bestimmung des (Si-H)-Wertes verfolgt. Nach vollständigem (Si-H)-Umsatz wird die Reaktionsmischung auf Raumtemperatur abgekühlt und das organomodifizierte Polydimethylsiloxan von der Katalysatorphase abfiltriert oder durch einfaches Abdekantieren von der Katalysatorphase getrennt. In allen Fällen wird die Metall-freiheit sowie die chemische Identität des organomodifizierten Polydimethylsiloxan durch ICP-OES (*Inductively coupled plasma optical emission spectroscopy*) und NMR-Spektroskopie nachgewiesen.

### Beispiel 1:

14,2 g (0,02 val) eines α,ω-(Si-H)-Polydimethylsiloxans mit einer Gesamtkettenlänge von 20 Si-Atomen werden zusammen mit 14,6 g (0,026 mol) eines Polyethers mit einem mittleren Molekulargewicht von 500 g/mol und einem Propylenglycolanteil von 40 % auf 90 °C erhitzt. Zu dieser Mischung werden 1,6 mg (20 ppm) Hexachloroplatinsäure(IV) (Speyer-Katalysator) gelöst in 0,5 g 1,2,3-Trimethylimidazolium-methylsulfat gegeben und bei 90 °C gerührt. Nach 3 Stunden wird auf Raumtemperatur abgekühlt und das Polyethersiloxan von der Katalysatorphase abfiltriert. Das Polyethersiloxan wird als wasserklare leicht gelbliche Flüssigkeit erhalten.

### Beispiel 2:

250 g (0,085 val) eines α,ω-(Si-H)-Polydimethylsiloxans mit einer Gesamtkettenlänge von 80 Si-Atomen werden zusammen mit 62,1 g (0,11 mol) eines Polyethers mit einem mittleren Molekulargewicht von 500 g/mol und einem Propylenglycolanteil von 40 % auf 90 °C erhitzt. Zu dieser Mischung werden 16,6 mg (20 ppm) Hexachloroplatinsäure(IV) (Speyer-Katalysator) gelöst in 10 g REWOQUAT® CPEM (Cocos-pentaethoxy-methylammonium-methosulfat) gegeben und bei 90 °C gerührt. Nach 1 Stunde wird auf Raumtemperatur abgekühlt und das Polyethersiloxan durch Zentrifugation von der Katalysatorphase abgetrennt. Das Polyethersiloxan wird als wasserklare farblose Flüssigkeit erhalten. Im Produkt werden 5 ppm Platingehalt nachgewiesen.

### Beispiel 3:

14,2 g (0,02 val) eines α,ω-(Si-H)-Polydimethylsiloxans mit einer Gesamtkettenlänge von 20 Si-Atomen werden zusammen mit 12,66 g (0,026 mol) eines Polyethers mit einem mittleren Molekulargewicht von 400 g/mol und einem Propylenglycolanteil von 100 % auf 90 °C erhitzt. Zu dieser Mischung werden 4,8 mg (20 ppm) Tris(triphenylphosphan)rhodium(I)chlorid (Rh-100) gelöst in 0,5 g 1,2-Dimethyl-3-butylimidazolium-bromid gegeben und bei 90 °C gerührt. Nach 5 Stunden wird auf Raumtemperatur abgekühlt und das Polyethersiloxan von der Katalysatorphase abfiltriert. Das Polyethersiloxan wird als wasserklare farblose Flüssigkeit erhalten.

### Beispiel 4:

28,4 g (0,04 val) eines α,ω-(Si-H)-Polydimethylsiloxans mit einer Gesamtkettenlänge von 20 Si-Atomen werden zusammen mit 21,74 g (0,052 mol) eines Polyethers mit einem mittleren Molekulargewicht von 400 g/mol und einem Propylenglycolanteil von 100 % auf 90 °C erhitzt. Zu dieser Mischung werden 0,8 mg (10 ppm) cis-Diammindichloroplatin(II) (cis-Pt) gelöst in 1 g 1,2,3-Trimethylimidazolium-methylsulfat gegeben und bei 90 °C gerührt. Nach 5 Stunden wird auf Raumtemperatur abgekühlt und das Polyethersiloxan von der Katalysatorphase abfiltriert. Das Polyethersiloxan wird als wasserklare farblose Flüssigkeit erhalten.

### Beispiel 5:

28,4 g (0,04 val) eines α,ω-(Si-H)-Polydimethylsiloxans mit einer Gesamtkettenlänge von 20 Si-Atomen werden zusammen mit 21,74 g (0,052 mol) eines Polyethers mit einem mittleren Molekulargewicht von 400 g/mol und einem Propylenglycolanteil von 100 % auf 90 °C erhitzt. Zu dieser Mischung werden 1,5 mg (10 ppm) Hexachloroplatinsäure(IV) (Speyer-Katalysator) gelöst in 1 g 1,2,3-Trimethylimidazolium-methylsulfat gegeben und bei 90 °C gerührt. Nach 5 Stunden wird auf Raumtemperatur abgekühlt und das Polyethersiloxan von der Katalysatorphase abfiltriert. Das Polyethersiloxan wird als wasserklare farblose Flüssigkeit erhalten.

### Beispiel 6:

14,2 g (0,02 val) eines α,ω-(Si-H)-Polydimethylsiloxans mit einer Gesamtkettenlänge von 20 Si-Atomen werden zusammen mit 12,66 g (0,026 mol) eines Polyethers mit einem mittleren Molekulargewicht von 400 g/mol und einem Propylenglycolanteil von 100 % auf 90 °C erhitzt. Zu dieser Mischung werden 4,9 mg (20 ppm) Tris(triphenylphosphan)rhodium(I)chlorid (Rh-100) gelöst in 0,5 g 1,2-Dimethyl-3-octylimidazolium-tetrafluoroborat gegeben und bei 90 °C gerührt. Nach 5 Stunden wird auf Raumtemperatur abgekühlt und das Polyethersiloxan von der Katalysatorphase abdekantiert. Das Polyethersiloxan wird als wasserklare farblose Flüssigkeit erhalten.

### Beispiel 7:

14,2 g (0,02 val) eines α,ω-(Si-H)-Polydimethylsiloxans mit einer Gesamtkettenlänge von 20 Si-Atomen werden zusammen mit 12,66 g (0,026 mol) eines Polyethers mit einem mittleren Molekulargewicht von 400 g/mol und einem Propylenglycolanteil von 100 % auf 90°C erhitzt. Zu dieser Mischung werden 1,5 mg (20 ppm) Hexachloroplatinsäure(IV) (Speyer-Katalysator) gelöst in 0,5 g 4-Methyl-1-butylpyridinium-tetrafluoroborat gegeben und bei 90 °C gerührt. Nach 1 Stunde wird auf Raumtemperatur abgekühlt und das Polyethersiloxan von der Katalysatorphase abdekantiert. Das Polyethersiloxan wird als wasserklare farblose Flüssigkeit erhalten.

### Beispiel 8:

14,2 g (0,02 val) eines α,ω-(Si-H)-Polydimethylsiloxans mit einer Gesamtkettenlänge von 20 Si-Atomen werden zusammen mit 14,6 g (0,026 mol) eines Polyethers mit einem mittleren Molekulargewicht von 500 g/mol und einem Propylenglycolanteil von 40 % auf 90 °C erhitzt. Zu dieser Mischung werden 5,2 mg (20 ppm) Tris(triphenylphosphan)rhodium(I)chlorid (Rh-100) gelöst in 0,5 g 3-Methyl-1-butylpyridinium-chlorid gegeben und bei 90 °C gerührt. Nach 2 Stunden wird auf Raumtemperatur abgekühlt und das Polyethersiloxan von der Katalysatorphase abfiltriert. Das Polyethersiloxan wird als wasserklare farblose Flüssigkeit erhalten.

### Beispiel 9:

71 g (0,1 val) eines α,ω-(Si-H)-Polydimethylsiloxans mit einer Gesamtkettenlänge von 20 Si-Atomen werden zusammen mit 58,7 g (0,13 mol) eines Polyethers mit einem mittleren Molekulargewicht von 400 g/mol und einem Ethylenglycolanteil von 100 % auf 90 °C erhitzt. Zu dieser Mischung werden 5 mg (20 ppm) Di-µ-chloro-dichloro-bis-(cyclohexen)diplatin(II) (Pt-92) gelöst in 3 g 1,2,3-Trimethylimidazolium-methylsulfat gegeben und bei 90 °C gerührt. Nach 5 Stunden wird auf Raumtemperatur abgekühlt und das Polyethersiloxan von der Katalysatorphase abfiltriert. Das Polyethersiloxan wird als wasserklare Flüssigkeit erhalten. Die zurückgewonnene Katalysatorphase wird noch fünf weitere Male eingesetzt, wobei keine Abnahme der Katalysatorreaktivität beobachtet werden kann und die Produktqualität gleichbleibend gut ist.

### Beispiel 10:

147,1 g (0,05 val) eines d,w-(Si-H)-Polydimethylsiloxans mit einer Gesamtkettenlänge von 80 Si-Atomen werden zusammen mit 7,4 g (0,065 mol) Allylglycidylether auf 115 °C erhitzt. Zu dieser Mischung werden 8 mg (20 ppm) Hexachloroplatinsäure(IV) (Speyer-Katalysator) gelöst in 2,5 g 1,2,3-Trimethylimidazolium-methylsulfat gegeben und bei 115 °C gerührt. Nach 3 Stunden wird auf Raumtemperatur abgekühlt und das epoxyfunktionelle Polydimethylsiloxan von der Katalysatorphase abdekantiert. Das epoxyfunktionelle Polydimethylsiloxan wird als wasserklare farblose Flüssigkeit erhalten.

### Beispiel 11:

22,7 g (0,03 val) eines (Si-H)-Polydimethylsiloxans mit einer Gesamtkettenlänge von 50 Si-Atomen und fünf seitenständigen (Si-H)-Funktionen werden zusammen mit 4,5 g (0,039 mol) Allylglycidylether auf 115 °C erhitzt. Zu dieser Mischung werden 1,4 mg (20 ppm) Hexachloroplatinsäure(IV) (Speyer-Katalysator) gelöst in 0,5 g 1,2,3-Trimethylimidazolium-methylsulfat gegeben und bei 115 °C gerührt. Nach 3 Stunden wird auf Raumtemperatur abgekühlt und das epoxyfunktionelle Polydimethylsiloxan von der Katalysatorphase abdekantiert. Das epoxyfunktionelle Polydimethylsiloxan wird als wasserklare farblose Flüssigkeit erhalten.

### Beispiel 12:

15,15 g (0,02 val) eines (Si-H)-Polydimethylsiloxans mit einer Gesamtkettenlänge von 50 Si-Atomen und fünf seitenständigen (Si-H)-Funktionen werden zusammen mit 12,6 g (0,026 mol) eines Polyethers mit einem mittleren Molekulargewicht von 400 g/mol und einem Propylenglycolanteil von 100 % auf 90 °C erhitzt. Zu dieser Mischung werden 1,5 mg (20 ppm) Hexachloroplatinsäure(IV) (Speyer-Katalysator) gelöst in 0,5 g 1,2,3-Trimethylimidazolium-methylsulfat gegeben und bei 90 °C gerührt. Nach 1 Stunde wird auf Raumtemperatur abgekühlt und das Polyethersiloxan von der Katalysatorphase abdekantiert. Das Polyethersiloxan wird als wasserklare farblose Flüssigkeit erhalten.

## Patentansprüche

1. Verfahren zur Herstellung von organomodifizierten Polysiloxanen durch übergangsmetallkatalysierte Addition von SiH-Gruppen enthaltenden Polysiloxanen an CC-Mehrfachbindungen enthaltende Substanzen, **dadurch gekennzeichnet, dass**
a) die Reaktion in Gegenwart ionischer Flüssigkeiten durchgeführt und
b) nach Beendigung der Reaktion diese wieder zusammen mit dem gelösten Katalysator von der Reaktionsmischung separiert wird.

2. Verfahren zur Durchführung von Standardhydrosilylierungsreaktionen, **dadurch gekennzeichnet, dass** der Reaktionsmischung gemäß Anspruch 1 b) zurückgewonnene bzw. separierte Mischungen aus Katalysator und ionischer Flüssigkeit zugesetzt werden.

3. Verfahren gemäß den Ansprüche 1 oder 2, **dadurch gekennzeichnet, dass** die ionischen Flüssigkeiten aus mindestens einem Kation der allgemeinen Formeln (1) bis (4) bestehen:
R¹R²R³R⁴N^{⊕} (1)
R¹R²N^{⊕}=CR³R⁴ (2)
R¹R²R³R⁴P^{⊕} (3)
R¹R²P^{⊕}=CR³R⁴ (4)
in denen
R¹,R²,R³,R⁴ gleich oder unterschiedlich sind und Wasserstoff, einen linearen oder verzweigten aliphatischen Kohlenwasserstoffrest mit 1 bis 20 Kohlenstoffatomen, einen cycloaliphatischen Kohlenwasserstoffrest mit 5 bis 30 Kohlenstoffatomen, einen aromatischen Kohlenwasserstoffrest mit 6 bis 30 Kohlenstoffatomen, einen Alkylarylrest mit 7 bis 40 Kohlenstoffatomen, einen durch ein oder mehrere Hete- roatome (Sauerstoff, NH, NR' mit R' C₁- bis C₅Alkylrest,) unterbrochenen linearen oder verzweigten aliphatischen Kohlenwasserstoffrest mit 2 bis 20 Kohlenstoffatomen, einen durch ein oder mehrere Funktionalitäten, ausgewählt aus der Gruppe -O-C(O)-, -(O)C-O-, -NH-C(O)-, -(O)C-NH, -(CH₃)N-C(O)-, - (O)C-N(CH₃)-, -S(O₂)-O-, -O-S(O₂)-, -S(O₂)-NH-, -NH-S(O₂)-, -S(O₂)-N(CH₃)-, -N(CH₃)-S(O₂)-, unterbrochenen linearen oder verzweigten aliphatischen Kohlenwasserstoffrest mit 2 bis 20 Kohlenstoffatomen, einen endständig OH, NH₂, N(H)R' mit R' C₁- bis C₅-Alkylrest, funktionalisierten linearen oder verzweigten aliphatischen Kohlenwasserstoffrest mit 1 bis 20 Kohlenstoffatomen oder einen blockweise oder statistisch aufgebauten Polyether gemäß (R⁵-O)ₙ-R⁶ bedeuten,
wobei
R⁵ ein 2 bis 4 Kohlenstoffatome enthaltender linearer oder verzweigter Kohlenwasserstoffrest,
n 1 bis 30 ist und
R⁶ Wasserstoff, einen linearen oder verzweigten aliphatischen Kohlenwasserstoffrest mit 1 bis 20 Kohlenstoffatomen einen cycloaliphatischen Kohlenwasserstoffrest mit 5 bis 30 Kohlenstoffatomen, einen aromatischen Kohlenwasserstoffrest mit 6 bis 30 Kohlenstoffatomen, einen Alkylarylrest mit 7 bis 40 Kohlenstoffatomen bedeutet oder ein Rest -C(O)-R⁷ mit
R⁷ gleich einem linearen oder verzweigten aliphatischen Kohlenwasserstoffrest mit 1 bis 20 Kohlenstoffatomen, einem cycloaliphatischen Kohlenwasserstoffrest mit 5 bis 30 Kohlenstoffatomen, einem aromatischen Kohlenwasserstoffrest mit 6 bis 30 Kohlenstoffatomen, einem Alkylarylrest mit 7 bis 40 Kohlenstoffatomen ist.

4. Verfahren gemäß der Ansprüche 1 oder 2, **dadurch gekennzeichnet, dass** solche Kationen verwendet werden, die sich von gesättigten oder ungesättigten cyclischen Verbindungen sowie von aromatischen Verbindungen mit jeweils mindestens einem dreibindigen Stickstoffatom in einem 4- bis 10-gliedrigen heterocyclischen Ring der allgemeinen Formeln (5), (6) und (7) ableiten, 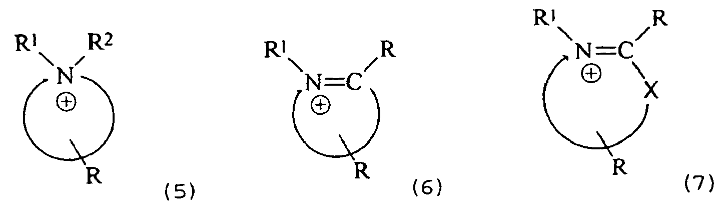
wobei die heterocyclischen Ringe gegebenenfalls weitere Hetereoatome enthalten können,
und worin
R¹ und R² die vorgenannte Bedeutung haben,
R ein Wasserstoff, ein linearer oder verzweigter aliphatischer Kohlenwasserstoffrest mit 1 bis 20 Kohlenstoffatomen, ein cycloaliphatischer Kohlenwasserstoffrest mit 5 bis 30 Kohlenstoffatomen, ein aromatischer Kohlenwasserstoffrest mit 6 bis 30 Kohlenstoffatomen oder ein Alkylarylrest mit 7 bis 40 Kohlenstoffatomen und
X ein Sauerstoffatom, ein Schwefelatom oder ein substituiertes Stickstoffatom (X = O, S, NR) sein kann.

5. Verfahren gemäß der Ansprüche 1 oder 2, **dadurch gekennzeichnet, dass** Kationen der allgemeinen Formel (8) mitverwendet werden 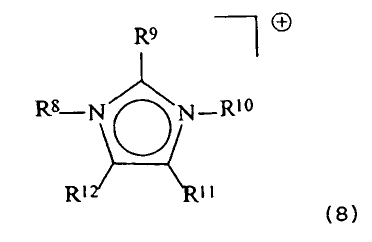
in denen
R⁸,R⁹,R¹⁰,R¹¹,R¹² gleich oder unterschiedlich sind und Wasserstoff, einen linearen oder verzweigten aliphatischen Kohlenwasserstoffrest mit 1 bis 30 Kohlenstoffatomen, einen cycloaliphatischen Kohlenwasserstoffrest mit 5 bis 30 Kohlenstoffatomen, einen aromatischen Kohlenwasserstoffrest mit 6 bis 30 Kohlenstoffatomen, einen Alkylarylrest mit 7 bis 40 Kohlenstoffatomen, einen durch ein oder mehrere Heteroatome (Sauerstoff, NH, NR' mit R' C₁- bis C₅Alkylrest,) unterbrochenen linearen oder verzweigten aliphatischen Kohlenwasserstoffrest mit 1 bis 20 Kohlenstoffatomen, einen durch ein oder mehrere Funktionalitäten, ausgewählt aus der Gruppe -O-C(O)-, -(O)C-O-, -NHC(O)-, -(O)C-NH, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)-, -N(CH₃)S(O₂)-, unterbrochenen linearen oder verzweigten aliphatischen Kohlenwasserstoffrest mit 1 bis 20 Kohlenstoffatomen, einen endständig OH, NH₂, N(H)R' mit R' C₁- bis C₅-Alkylrest, funktionalisierten linearen oder verzweigten aliphatischen Kohlenwasserstoffrest mit 1 bis 20 Kohlenstoffatomen oder einen blockweise oder statistisch aufgebauten Polyether aufgebaut aus -(R⁵-O)ₙ-R⁶ bedeuten,
wobei
R⁵ ein 2 bis 4 Kohlenstoffatome enthaltender Kohlenwasserstoffrest,
n 1 bis 30 ist und
R⁶ Wasserstoff, einen linearen oder verzweigten aliphatischen Kohlenwasserstoffrest mit 1 bis 20 Kohlenstoffatomen einen cycloaliphatischen Kohlenwasserstoffrest mit 5 bis 30 Kohlenstoffatomen, einen aromatischen Kohlenwasserstoffrest mit 6 bis 30 Kohlenstoffatomen, einen Alkylarylrest mit 7 bis 40 Kohlenstoffatomen bedeutet oder ein Rest -C(O)-R⁷ mit
R⁷ gleich einem linearen oder verzweigten aliphatischen Kohlenwasserstoffrest mit 1 bis 20 Kohlenstoffatomen, einem cycloaliphatischen Kohlenwasserstoffrest mit 5 bis 30 Kohlenstoffatomen, einem aromatischen Kohlenwasserstoffrest mit 6 bis 30 Kohlenstoffatomen, einem Alkylarylrest mit 7 bis 40 Kohlenstoffatomen ist.

6. Verfahren gemäß der Ansprüche 1 bis 5, **dadurch gekennzeichnet, dass** die in dem erfindungsgemäßen Verfahren eingesetzten ionischen Flüssigkeiten ein Anion ausgewählt aus der Gruppe der Halogenide, Bis(perfluoralkylsulfonyl)amide, Alkyl- und Aryltosylate, Perfluoralkyltosylate, Nitrate, Sulfate, Hydrogensulfate, Alkyl- und Arylsulfate, Perfluoralkylsulfate, Sulfonate, Alkyl- und Arylsulfonate, perfluorierte Alkyl- und Arylsulfonate, Alkyl- und Arylcarboxylate, Perfluoralkylcarboxylate, Perchlorate, Tetrarchloroaluminate, Saccharinate enthalten, insbesondere Dicyanamid, Tetrafluoroborat, Hexafluorophosphat und Phosphat.

7. Verfahren gemäß der Ansprüche 1 oder 2, **dadurch gekennzeichnet, dass** die in dem erfindungsgemäßen Verfahren eingesetzten ionischen Flüssigkeiten ein Kation ausgewählt aus der Gruppe der in 2-Position substituierten Imidazoliumionen und als Anion Methylsulfat, insbesondere 1,2,3-Trimethylimidazoliumion, enthalten.

8. Verfahren gemäß der Ansprüche 1 oder 2, **dadurch gekennzeichnet, dass** die in dem erfindungsgemäßen Verfahren eingesetzten ionischen Flüssigkeiten ein Kation ausgewählt aus der Gruppe der Pyridiniumionen und als Anion Tetrafluoroborat enthalten.

9. Verfahren gemäß der Ansprüche 1 oder 2, **dadurch gekennzeichnet, dass** als ionische Flüssigkeiten Mischungen aus zwei oder mehreren Verbindungen der allgemeinen Formeln 1 bis 8 eingesetzt werden.

10. Verfahren gemäß der Ansprüche 1 bis 8, **dadurch gekennzeichnet, dass** die Menge zugesetzter ionischer Flüssigkeit einen Massenanteil im Bereich von 0,1 bis 98 %, vorzugweise 0,1 bis 20 %, besonders bevorzugt 0,5 bis 5 % besitzt.

## Claims

1. Process for preparing organomodified polysiloxanes by addition of SiH-containing polysiloxanes onto substances containing C-C multiple bonds in the presence of transition metal catalysts, **characterized in that**
a) the reaction is carried out in the presence of ionic liquids and
b) after the reaction is complete, the ionic liquid together with the dissolved catalyst is separated from the reaction mixture.

2. Method of carrying out standard hydrosilylation reactions, **characterized in that** mixtures of catalyst and ionic liquid which have been recovered or separated off as set forth in claim 1 b) are added to the reaction mixture.

3. Process according to Claim 1. or 2, **characterized in that** the ionic liquids comprise at least one cation of the formulae (1) to (4):
R¹R²R³R⁴N^{⊕} (1)
R¹R²N^{⊕}=CR³R⁴ (2)
R¹R²R³R⁴P^{⊕} (3)
R¹R²P^{⊕}=CR³R⁴ (4)
where
R¹,R²,R³,R⁴ are identical or different and are each hydrogen, a linear or branched aliphatic hydrocarbon radical having from 1 to 20 carbon atoms, a cycloaliphatic hydrocarbon radical having from 5 to 30 carbon atoms, an aromatic hydrocarbon radical having from 6 to 30 carbon atoms, an alkylaryl radical having from 7 to 40 carbon atoms, a linear or branched aliphatic hydrocarbon radical which has from 2 to 20 carbon atoms and is interrupted by one or more hetero atoms (oxygen, NH, NR' where R' is a C₁-C₅-alkyl radical), a linear or branched aliphatic hydrocarbon radical which has from 2 to 20 carbon atoms and is interrupted by one or more functional groups selected from among -O-C(O)-, -(O)C-O-, -NH-C(O)-, -(O)C-NH, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)-, -N(CH₃)-S(O₂)-, a linear or branched aliphatic hydrocarbon radical which has from 1 to 20 carbon atoms and is functionalized at the end of the chain by OH, NH₂, N (H) R' where R' is a C₁-C₅-alkyl radical, or a polyether which may have a block or random structure and has the formula -(R⁵-O)ₙ-R⁶,
where
R⁵ is a linear or branched hydrocarbon radical containing from 2 to 4 carbon atoms,
n is from 1 to 30 and
R⁶ is hydrogen, a linear or branched aliphatic hydrocarbon radical having from 1 to 20 carbon atoms, a cycloaliphatic hydrocarbon radical having from 5 to 30 carbon atoms, an aromatic hydrocarbon radical having from 6 to 30 carbon atoms, an alkylaryl radical having 7 to 40 carbon atoms or a -C(O)-R⁷ radical where
R⁷ is a linear or branched aliphatic hydrocarbon radical having from 1 to 20 carbon atoms, a cycloaliphatic hydrocarbon radical having from 5 to 30 carbon atoms, an aromatic hydrocarbon radical having from 6 to 30 carbon atoms or an alkylaryl radical having from 7 to 40 carbon atoms.

4. Process according to Claim 1 or 2, **characterized in that** cations which are derived from saturated or unsaturated cyclic compounds or aromatic compounds each having at least one trivalent nitrogen atom in a 4- to 10-membered heterocyclic ring of the formulae (5), (6) and (7) 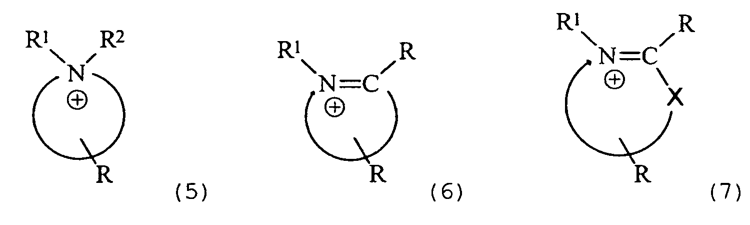
where further heteratoms may be present in the heterocyclic rings,
and
R¹ and R² are as defined above,
R is a hydrogen atom, a linear or branched aliphatic hydrocarbon radical having from 1 to 20 carbon atoms, a cycloaliphatic hydrocarbon radical having from 5 to 30 carbon atoms, an aromatic hydrocarbon radical having from 6 to 30 carbon atoms or an alkylaryl radical having from 7 to 40 carbon atoms, and
X is an oxygen atom, a sulphur atom or a substituted nitrogen atom (X = O, S, NR).
are used.

5. Process according to Claim 1 or 2, **characterized in that** cations of the formula (8), 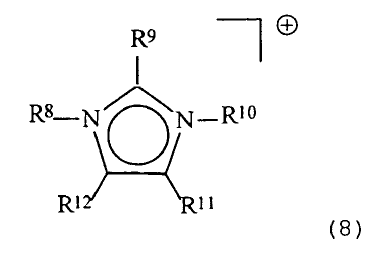
where
R⁸,R⁹,R¹⁰,R¹¹,R¹² are identical or different and are each hydrogen, a linear or branched aliphatic hydrocarbon radical having from 1 to 30 carbon atoms, a cycloaliphatic hydrocarbon radical having from 5 to 30 carbon atoms, an aromatic hydrocarbon radical having from 6 to 30 carbon atoms, an alkylaryl radical having from 7 to 40 carbon atoms, a linear or branched aliphatic hydrocarbon radical which has from 1 to 20 carbon atoms and is interrupted by one or more hetero atoms (oxygen, NH, NR' where R' is a C₁-C₅-alkyl radical), a linear or branched aliphatic hydrocarbon radical which has from 1 to 20 carbon atoms and is interrupted by one or more functional groups selected from among -O-C(O)-, -(O)C-O-, -NH-C(O)-, -(O)C-NH, -(CH₃)N-C(O)-,-(O)C-N(CH₃)-, -S(O₂)-O-, -O-S(O₂)-, -S(O₂)-NH-,-NH-S(O₂)-, -S(O₂)-N(CH₃)-, -N(CH₃)-S(O₂)-, a linear or branched aliphatic hydrocarbon radical which has from 1 to 20 carbon atoms and is functionalized at the end of the chain by OH, NH₂, N(H)R' where R' is a C₁-C₅-alkyl radical, or a polyether which may have a block or random structure and has the formula -(R⁵-O)ₙ-R⁶,
where
R⁵ is a hydrocarbon radical containing from 2 to 4 carbon atoms,
n is from 1 to 30 and
R⁶ is hydrogen, a linear or branched aliphatic hydrocarbon radical having from 1 to 20 carbon atoms, a cycloaliphatic hydrocarbon radical having from 5 to 30 carbon atoms, an aromatic hydrocarbon radical having from 6 to 30 carbon atoms, an alkylaryl radical having 7 to 40 carbon atoms or a -C(O)-R⁷ radical where
R⁷ is a linear or branched aliphatic hydrocarbon radical having from 1 to 20 carbon atoms, a cycloaliphatic hydrocarbon radical having from 5 to 30 carbon atoms, an aromatic hydrocarbon radical having from 6 to 30 carbon atoms or an alkylaryl radical having from 7 to 40 carbon atoms.

6. Process according to any of Claims 1 to 5, **characterized in that** the ionic liquids used in the process of the invention contain an anion selected from the group consisting of halides, bis(perfluoroalkylsulphonyl)amides, alkyltosylates und aryltosylates, perfluoroalkyltosylates, nitrates, sulphates, hydrogensulphates, alkylsulphates and arylsulphates, perfluoroalkylsulphates, sulphonates, alkylsulphonates and arylsulphonates, perfluorinated alkylsulphonates and arylsulphonates, alkylcarboxylates and arylcarboxylates, perfluoroalkylcarboxylates, perchlorates, tetrachloroaluminates, saccharinates, in particular dicyanamide, tetrafluoroborate, hexafluorophosphate and phosphate.

7. Process according to Claim 1 or 2, **characterized in that** the ionic liquids used in the process of the invention comprise a cation selected from the group consisting of imidazolium ions substituted in the 2-position, together with methylsulphate as anion, in particular the 1,2,3-trimethylimidazolium ion.

8. Process according to Claim 1 or 2, **characterized in that** the ionic liquids used in the process of the invention comprise a cation selected from the group consisting of pyridinium ions together with tetrafluoroborate as anion.

9. Process according to Claim 1 or 2, **characterized in that** mixtures of two or more compounds of the formulae 1 to 8 are used as ionic liquids.

10. Process according to any of Claims 1 to 8, **characterized in that** the amount of ionic liquid added is from 0.1 to 98% by mass, preferably from 0.1 to 20% by mass, particularly preferably from 0.5 to 5% by mass.

## Revendications

1. Procédé pour la préparation de polysiloxanes organomodifiés par addition, catalysée par des métaux de transition, de polysiloxanes contenant des groupements SiH sur des substances contenant des liaisons multiples CC, **caractérisé en ce qu'**on
a) réalise la réaction en présence de liquides ioniques et
b) les sépare à nouveau après la réaction, avec le catalyseur dissous, du mélange réactionnel.

2. Procédé pour réaliser des réactions d'hydrosilylation standard, **caractérisé en ce que** le mélange réactionnel selon la revendication 1b) est mélangé avec des mélanges récupérés ou, selon le cas, séparés de catalyseur et de liquide ionique.

3. Procédé selon la revendication 1 ou 2, **caractérisé en ce que** les liquides ioniques sont constitués d'au moins un cation des formules générales (1) à (4):
R¹R²R³R⁴N⁺ (1)
R¹R²N⁺=CR³R⁴ (2)
R¹R²R³R⁴P⁺ (3)
R¹R²P⁺=CR³R⁴ (4)
dans lesquelles
R¹, R², R³, R⁴ sont identiques ou différents et représentent hydrogène, un radical hydrocarboné aliphatique, linéaire ou ramifié, comprenant 1 à 20 atomes de carbone, un radical hydrocarboné cycloaliphatique comprenant 5 à 30 atomes de carbone, un radical hydrocarboné aromatique comprenant 6 à 30 atomes de carbone, un radical alkylaryle comprenant 7 à 40 atomes de carbone, un radical hydrocarboné aliphatique linéaire ou ramifié, interrompu par un ou plusieurs hétéroatomes (oxygène, NH, NR' avec R' représentant un radical alkyle en C₁ à C₅) comprenant 2 à 20 atomes de carbone, un radical hydrocarboné aliphatique, linéaire ou ramifié, interrompu par une ou plusieurs fonctionnalités, choisies dans le groupe -OC(O)-, -(O)C-O-, -NH-C(O)-, -(O)C-NH, -(CH₃)N-C(O)-, -(O)C-N(CH₃)-, -S(O₂)-O-, -O-S(O₂)-, -S(O₂)-NH-, NH-S(O₂)-, -S(O₂)-N(CH₃)-, -N(CH₃)-S(O₂)-, comprenant 2 à 20 atomes de carbone, un radical hydrocarboné aliphatique linéaire ou ramifié, fonctionnalisé en position terminale par OH, NH₂, N(H)R' avec R' représentant un radical alkyle en C₁ à C₅, comprenant 1 à 20 atomes de carbone ou un polyéther à blocs ou statistique selon -(R⁵-O)ₙ-R⁶,
R⁵ signifiant un radical hydrocarboné linéaire ou ramifié comprenant 2 à 4 atomes de carbone,
n valant 1 à 30 et
R⁶ représentant hydrogène, un radical hydrocarboné aliphatique, linéaire ou ramifié, comprenant 1 à 20 atomes de carbone, un radical hydrocarboné cycloaliphatique comprenant 5 à 30 atomes de carbone, un radical hydrocarboné aromatique comprenant 6 à 30 atomes de carbone, un radical alkylaryle comprenant 7 à 40 atomes de carbone ou un radical -C(O)-R⁷ avec
R⁷ représentant un radical hydrocarboné aliphatique linéaire ou ramifié comprenant 1 à 20 atomes de carbone, un radical hydrocarboné cycloaliphatique comprenant 5 à 30 atomes de carbone, un radical hydrocarboné aromatique comprenant 6 à 30 atomes de carbone, un radical alkylaryle comprenant 7 à 40 atomes de carbone.

4. Procédé selon la revendication 1 ou 2, **caractérisé en ce qu'**on utilise des cations qui sont dérivés de composés cycliques saturés ou insaturés, ainsi que de composés aromatiques comprenant à chaque fois au moins un atome d'azote trivalent dans un hétérocycle de 4 à 10 éléments, de formules générales (5), (6) et (7), 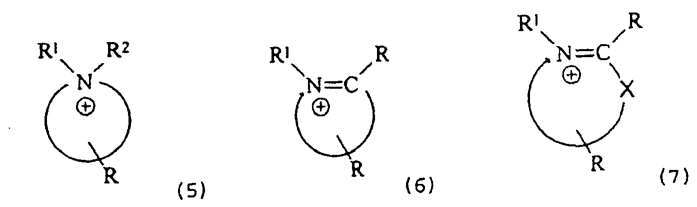
les hétérocycles pouvant le cas échéant contenir d'autres hétéroatomes et
dans lesquelles
R¹ et R² ont la signification susmentionnée,
R représente hydrogène, un radical hydrocarboné aliphatique linéaire ou ramifié comprenant 1 à 20 atomes de carbone, un radical hydrocarboné cycloaliphatique comprenant 5 à 30 atomes de carbone, un radical hydrocarboné aromatique comprenant 6 à 30 atomes de carbone ou un radical alkylaryle comprenant 7 à 40 atomes de carbone et
X représente un atome d'oxygène, un atome de soufre ou un atome d'azote substitué (X = O, S, NR).

5. Procédé selon la revendication 1 ou 2, **caractérisé en ce qu'**on utilise conjointement des cations de formule générale (8) 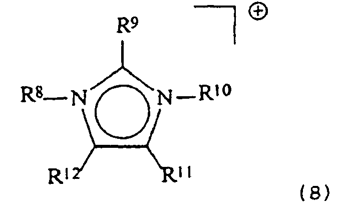
dans laquelle
R⁸, R⁹, R¹⁰, R¹¹ R¹² sont identiques ou différents et représentent hydrogène, un radical hydrocarboné aliphatique linéaire ou ramifié comprenant 1 à 30 atomes de carbone, un radical hydrocarboné cycloaliphatique comprenant 5 à 30 atomes de carbone, un radical hydrocarboné aromatique comprenant 6 à 30 atomes de carbone, un radical alkylaryle comprenant 7 à 40 atomes de carbone, un radical hydrocarboné aliphatique linéaire ou ramifié, interrompu par un ou plusieurs hétéroatomes (oxygène, NH, NR' avec R' représentant un radical alkyle en C₁ à C₅) comprenant 1 à 20 atomes de carbone, un radical hydrocarboné aliphatique linéaire ou ramifié, interrompu par une ou plusieurs fonctionnalités, choisies dans le groupe -O-C(O)-, -(O)C-O-, -NH-C(O)-, -(O)C-NH, -(CH₃)N-C(O), -(O)C-N(CH₃)-, -S(O₂)-O-, -O-S(O₂)-, -S(O₂)-NH-, -NH-S(O₂)-, -S(O₂)-N(CH₃)-, -N(CH₃)-S(O₂)-, comprenant 1 à 20 atomes de carbone, un radical hydrocarboné aliphatique linéaire ou ramifié, fonctionnalisé en position terminale par OH, NH₂, N(H)R' avec R' représentant un radical alkyle en C₁ à C₅, comprenant 1 à 20 atomes de carbone ou un polyéther à blocs ou statistique constitué par - (R⁵-O)ₙ-R⁶,
où
R⁵ représente un radical hydrocarboné comprenant 2 à 4 atomes de carbone,
n vaut 1 à 30 et
R⁶ représente hydrogène, un radical hydrocarboné aliphatique linéaire ou ramifié, comprenant 1 à 20 atomes de carbone, un radical hydrocarboné cycloaliphatique comprenant 5 à 30 atomes de carbone, un radical hydrocarboné aromatique comprenant 6 à 30 atomes de carbone, un radical alkylaryle comprenant 7 à 40 atomes de carbone ou un radical -C(O)-R⁷ avec
R⁷ représentant un radical hydrocarboné aliphatique linéaire ou ramifié comprenant 1 à 20 atomes de carbone, un radical hydrocarboné cycloaliphatique comprenant 5 à 30 atomes de carbone, un radical hydrocarboné aromatique comprenant 6 à 30 atomes de carbone, un radical alkylaryle comprenant 7 à 40 atomes de carbone.

6. Procédé selon les revendications 1 à 5, **caractérisé en ce que** les liquides ioniques utilisés dans le procédé selon l'invention contiennent un anion choisi dans le groupe des halogénures, des bis(perfluoroalkylsulfonyl)amides, des alkyltosylates et des aryltosylates, des perfluoroalkyltosylates, des nitrates, des sulfates, des hydrogénosulfates, des alkylsulfates et des arylsulfates, des perfluoroalkylsulfates,- des sulfonates, des alkylsulfonates et des arylsulfonates, des alkylsulfonates et des arylsulfonates perfluorés, des alkylcarboxylates et des arylcarboxylates, des perfluoroalkylcarboxylates, des perchlorates, des tétrachloroaluminates, des saccharinates, en particulier le dicyanamide, le tétrafluoroborate, l'hexafluorophosphate et le phosphate.

7. Procédé selon la revendication 1 ou 2, **caractérisé en ce que** les liquides ioniques utilisés dans le procédé selon l'invention contiennent un cation choisi dans le groupe des ions imidazolium substitués en deuxième position et comme anion le méthylsulfate, en particulier l'ion 1,2,3-triméthylimidazolium.

8. Procédé selon la revendication 1 ou 2, **caractérisé en ce que** les liquides ioniques utilisés dans le procédé selon l'invention contiennent un cation choisi dans le groupe des ions pyridinium et comme anion le tétrafluoroborate.

9. Procédé selon la revendication 1 ou 2, **caractérisé en ce qu'**on utilise comme liquides ioniques des mélanges constitués de deux composés ou plus des formules générales 1 à 8.

10. Procédé selon les revendications 1 à 8, **caractérisé en ce que** la quantité de liquide ionique ajouté représente une proportion en masse dans la plage de 0,1 à 98%, de préférence de 0,1 à 20%, de manière particulièrement préférée de 0,5 à 5%.
